# EUROPÄISCHE PATENTANMELDUNG

(11) **EP 0 521 411 A1**
(43) Veröffentlichungstag der Anmeldung: **07.01.1993**
(21) Anmeldenummer: 92110852.8
(22) Anmeldetag: 26.06.1992
(51) Int. Cl.: F01N 3/20, F02D 9/04

(54) **Abgasleitung einer Brennkraftmaschine**

(30) Priorität: 04.07.1991 DE 4122141
(71) Anmelder: Dr.Ing.h.c. F. Porsche Aktiengesellschaft, D-70435 Stuttgart (DE)
(72) Erfinder: Kaiser, Friedrich Wilhelm, W-7251 Weissach (DE)

(57) **Zusammenfassung**

Hinter dem in einer Abgasleitung (4) einer Brennkraftmaschine (1) angeordneten Katalysator (5) ist ein selbstregelndes Drosselelement (8) angeordnet, welches in der Warmlaufphase der Brennkraftmaschine (1) die Abgasleitung (4) nahezu vollständig verschließt. Der dadurch erhöhte Abgasgegendruck bewirkt einen größeren Motormassendurchsatz, wodurch die Abgastemperatur steigt und der Katalysator zügig erwärmt wird.

## Beschreibung

Die Erfindung betrifft eine Abgasleitung einer Brennkraftmaschine gemäß dem Oberbegriff des Patentanspruches 1.

Aus der DE-OS 23 21 578 ist ein Drosselelement aus Bimetall für die Abgasleitung einer Brennkraftmaschine bekannt, welches bei niedriger Abgastemperatur den vollen Querschnitt einer Abgasleitung freigibt und bei höheren Temperaturen ein Stauelement in den Abgasstrom schwenkt. Mit dieser Anordnung soll eine schnellere Aufheizung der Kernzone des Katalysators nach dem Start der Brennkraftmaschine und eine gleichmäßige, lebensdauererhöhende Beaufschlagung des Katalysators nach dem Erreichen seiner Arbeitstemperatur erzielt werden.

Der Erfindung liegt die Aufgabe zugrunde, eine Abgasleitung einer Brennkraftmaschine mit einem Katalysator zu schaffen, in der der Katalysator nach dem Anlassen der Brennkraftmaschine in möglichst kurzer Zeit seine Arbeitstemperatur erreicht.

Die Lösung dieser Aufgabe gelingt mit den Merkmalen des Patentanspruches 1. Vorteilhafte Ausgestaltungen der Erfindung sind in den Unteransprüchen benannt.

Durch die Anordnung eines Drosselelementes in der Abgasleitung, welches bei kalter Brennkraftmaschine den Querschnitt der Abgasleitung bis auf einen verbleibenden Spalt reduziert, wird der Abgasgegendruck erhöht. Zur Kompensation dieses erhöhten Gegendruckes wird der Motormassendurchsatz erhöht, wodurch die Abgastemperatur steigt und der Katalysator schneller seine Arbeitstemperatur erreicht. Das Drosselelement ist z.B. als Bimetall oder Memorymetall ausgebildet und mit seinem stromauf liegenden, ortsfesten Ende benachbart einer Seitenwandung der Abgasleitung angeordnet. Das stromab liegende, freie Ende bildet in kaltem Zustand einen Spalt mit der gegenüberliegenden Seitenwandung. Das Drosselelement versperrt somit im kalten Zustand die Abgasleitung bis auf den zum Abströmen der in der Kaltstartphase anfallenden Abgasmenge erforderlichen Spalt. Mit dem Warmlaufen der Brennkraftmaschine erhöht sich die Abgastemperatur, wodurch sich das Drosselelement verformt und dabei fortschreitend den gesamten Querschnitt der Abgasleitung freigibt. Die Elastizität des Drosselelementes ist so ausgelegt, daß bei einem Kaltstart und sofortiger, hoher Last der Abgasstrom das Drosselelement den Spalt vergrößernd anhebt.

Vorteilhafterweise ist diese Anordnung selbstregelnd, so daß keinerlei Sensoren oder Steuerelemente erforderlich sind. Sie ist von einfachem, wartungsfreiem Aufbau und ist bevorzugt stromab des Katalysators angeordnet, wodurch der Katalysator in optimal kurzer Zeit erwärmt wird.

Die Erfindung wird anhand von Figuren beispielhaft näher erläutert.

Es zeigen:

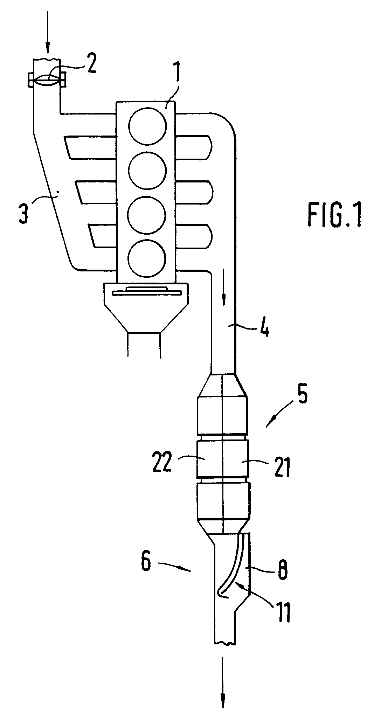

- Fig. 1: eine schematische Ansicht einer Abgasleitung an einer Brennkraftmaschine und
- Fig. 2: einen schematischen Schnitt durch einen Teil der Abgasleitung gemäß Fig. 1.

Eine Brennkraftmaschine 1 weist einen von einer Drosselklappe 2 beherrschten Ansaugluftverteiler 3 und eine Abgasleitung 4 mit einem Katalysator 5 auf. Die Strömungsrichtung der Abgase ist durch Richtungspfeile dargestellt. Stromab des Katalysators 5 ist ein Abschnitt 6 der ansonsten kreisförmigen Abgasleitung 4 rechteckig ausgeführt. Dieser Abschnitt 6 weist benachbart einer Seitenwandung 7 eine Ausbuchtung 8 auf, in deren stromauf liegendem Ende eine Halterung 9 angeordnet ist.

Diese Halterung 9 nimmt ein ortsfestes Ende 10 eines als Bimetallblech 11 ausgeführten Drosselelementes auf, welches sich von der Halterung 9 aus die Abgasleitung 4 nahezu vollständig verschließend bis zu einer gegenüberliegenden Seitenwandung 12 erstreckt. An der Seitenwandung 12 ist ein Anschlag 13 angeordnet, auf dem das stromab liegende, bewegliche Ende 14 aufliegt. Der Anschlag 13 beläßt einen Spalt 15 zwischen dem Ende 14 und der Seitenwandung 12, so daß ein Mindestquerschnitt der Abgasleitung 4 frei bleibt.

Das Bimetallblech 11 wird aus zwei Metallstreifen 16, 17 gebildet, die beabstandet zueinander in der Halterung 9 befestigt sind. Am Ende 14 ist an dem Metallstreifen 16 eine Tasche 18 angeformt, in der der Metallstreifen 17 geführt ist.

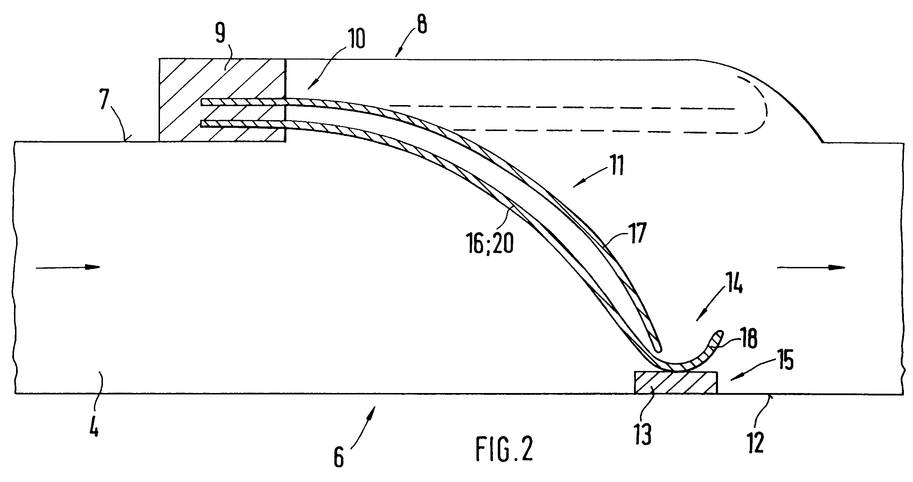

Unmittelbar nach dem Start der Brennkraftmaschine 1 ist die Abgastemperatur relativ niedrig, das freie Ende 14 des Bimetallbleches 11 befindet sich in der in Fig. 2 gezeigten Ausgangsstellung. Der Abgasstrom beaufschlagt den Katalysator 5 ungestört und heizt ihn vergleichsweise schnell auf. Diese Aufheizzeit wird durch die Stellung des Bimetallbleches 11 verkürzt, da durch das nahezu vollständige Versperren der Abgasleitung 4 der Abgasgegendruck für die Brennkraftmaschine 1 hoch ist. Dieses führt zu einer erhöhten internen Abgasrückführung in den Überschneidungszeiten von Ein- und Auslaßventilen des Gaswechselsystemes und somit zu einer Schadstoffreduktion in der Warmlaufphase der Brennkraftmaschine. Zur Kompensation des erhöhten Abgasgegendruckes wird der Motormassendurchsatz erhöht, z.B. durch einen Eingriff an der Drosselklappe 2 oder an einem nicht gezeigten Leerlaufsteller. Der erhöhte Durchsatz führt einerseits zu einer schnelleren Erwärmung der Brennkraftmaschine und damit zu einer Reduzierung der Schadstoffe, andererseits steigt die Abgastemperatur und der Abgasmassenstrom. Die steigende Temperatur erwärmt den Katalysator 5 sowie das Bimetallblech 11 zügig, so daß das freie Ende 14 des Bimetallbleches 11 von dem Anschlag 13 abhebt und sich in die in Fig. 2 gestrichelt gezeigte Endstellung bewegt. Diese Bewegung wird durch den Abgasstrom unterstützt.

Anstelle der Metallstreifen 16, 17 kann ein Memorymetall 20 verwendet werden, welches bei Erreichen einer bestimmten Temperatur ruckartig von der Ausgangsstellung in die Endstellung kippt. Wird diese Temperatur unterschritten, kippt das Memorymetall 20 in die Ausgangsstellung zurück.

Der Abschnitt 6 kann z.B. bei ungünstigen Einbauverhältnissen vor dem Katalysator angeordnet sein. Hierbei erfolgt eine rasche Erwärmung des Drosselelementes, da es unmittelbar von dem Abgasstrom beaufschlagt wird.

Die Halterung 9 kann in dem Gehäuse des z.B. aus zwei Halbschalen 21, 22 gefertigten Katalysators 5 in einer Halbschale 21 integriert sein.

## Patentansprüche

1. Abgasleitung einer Brennkraftmaschine, mit mindestens einem in der Abgasleitung angeordneten Katalysator und einem in dieser angeordneten, verstellbaren Drosselelement, dadurch gekennzeichnet, daß das Drosselelement (Bimetallblech 11; Memorymetall 20) mit einem stromauf liegenden, ortsfesten Ende (10) benachbart einer Seitenwandung (7) der Abgasleitung (4) angeordnet ist und ein stromab liegendes, bewegliches Ende (14) bei kalter Brennkraftmaschine (1) einen Spalt (15) mit einer gegenüberliegenden Seitenwandung (12) bildend angeordnet ist.

2. Abgasleitung nach Anspruch 1, dadurch gekennzeichnet, daß das Drosselelement (Bimetallblech 11; Memorymetall 20) mittels einer Halterung (9) mit seinem ortsfesten Ende (10) in einer Ausbuchtung (8) der Seitenwandung (7) gehalten ist.

3. Abgasleitung nach Anspruch 1, dadurch gekennzeichnet, daß das Bimetallblech (11) aus Metallstreifen (16, 17) besteht, wobei an dem beweglichen Ende (14) ein Metallstreifen (16) eine angeformte Tasche (18) zur Führung des anderen Metallstreifens (17) aufweist.

4. Abgasleitung nach Anspruch 1, dadurch gekennzeichnet, daß das Bimetallblech (11) aus räumlich getrennt angeordneten Metallstreifen (16, 17) besteht, wobei an dem beweglichen Ende (14) ein Metallstreifen (16) eine angeformte Tasche (18) zur Führung des anderen Metallstreifens (17) aufweist.

5. Abgasleitung nach Anspruch 1, dadurch gekennzeichnet, daß das Drosselelement (Bimetallblech 11; Memorymetall 20) stromab des Katalysators (5) angeordnet ist.

6. Abgasleitung nach Anspruch 1, dadurch gekennzeichnet, daß das Gehäuse des Katalysators (5) aus Halbschalen (21, 22) geformt ist, wobei eine Halterung (9) für das Drosselelement (Bimetallblech 11; Memorymetall 20) in eine Halbschale (21 bzw. 22) integriert ist.

7. Abgasleitung nach einem oder mehreren der vorhergehenden Ansprüche, dadurch gekennzeichnet, daß der Spalt (15) durch einen an der Seitenwandung (12) angeordneten Anschlag (13) gebildet ist.

8. Abgasleitung nach Anspruch 1, dadurch gekennzeichnet, daß die Abgasleitung (4) im Bereich des Drosselelementes (Bimetall 11; Memorymetall 20) im Querschnitt rechteckig ausgeführt ist.
